# EUROPEAN PATENT APPLICATION

(11) **EP 2 587 825 A1**
(43) Date of publication of application: **01.05.2013**
(21) Application number: 12189475.2
(22) Date of filing: 22.10.2012
(51) Int. Cl.: H04N 21/24, H04N 21/262

(54) **Method to remotely manage the operation of an adaptive streaming client**

(30) Priority: 27.10.2011 EP 11306390
(71) Applicant: Thomson Licensing, 92130 Issy-les-Moulineaux (FR)
(72) Inventor: Gouache, Stephane, 35576 CESSON SEVIGNE (FR); Burklin, Helmut, 35576 CESSON SEVIGNE (FR); Straub, Gilles, 35576 CESSON SEVIGNE (FR)
(74) Representative: Perrot, Sébastien

(57) **Abstract**

The present invention concerns a method to control transmission data rate between a server (1) and a field of receivers (4, 6, 8), the server (1) being adapted to transmit data representative of an audiovisual content, the audiovisual content being available from said server (1) in at least two versions, the versions corresponding respectively to different transmission bit-rates, the server (1) being adapted to transmit audiovisual contents in successive parts, each of said successive parts being chosen as one of at least two versions in response to transmission requests sent by the receivers (4, 6, 8), said transmission requests comprising a transmission parameter, the method comprising the steps of reception by a controller (2) of monitoring information from the receivers (4, 6, 8), the transmission of control parameters from the controller (2) to the receivers (4, 6, 8), the control parameters being defined from the monitoring information in order to define the transmission parameters of the requests from the receivers (4, 6, 8) to the server (1) or a reception parameter of at least one of the receivers (4, 6, 8).

## Description

### FIELD OF THE INVENTION

The present invention relates generally to video streaming content distribution and in particular to the handling of the bandwidth used by video streaming between servers and receivers.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Media delivery streaming solutions are mainly based on protocols such as Real time streaming Protocol (RTSP) as defined in the ITEF RFC 2326, Microsoft Media Server (MMS) proprietary protocol from Microsoft or Real Time Messaging Protocol (RTMP) proprietary protocol from Adobe Systems.

Streaming techniques based on the HTTP protocol have emerged, to allow delivery of content over the Internet. These techniques allow a client device to receive video in the form of successive small segments, called chunk, and being a few seconds long. Each segment is requested through the HTTP protocol and may exist in different variants, allowing the client device to choose at any time an appropriate bit-rate matching the network and its own constraints. Different bit rates correspond to different quality levels of the delivered content. As soon as the network bandwidth measured by the client device decreases, it requests chunks which are less restrictive with respect to network bandwidth requirement. When the network bandwidth measured by the client device increases, it requests chunks which are more restrictive with respect to network bandwidth requirement.

The available chunks are generally listed in a playlist generated and provided by the streaming server. The playlist can point to other playlists such as one per type of format. Playlists describe the chunk content, such as the codec or the required bandwidth for downloading it, and the way to request them. The playlist format can be the one described in the document "HTTP Live Streaming draft, pantos, http-live-streaming, 06", extended with codec information to describe the various SVC layers.

Various HTTP streaming techniques are available. Apple HTTP Live Streaming (HLS) was published as a draft RFC, and is used mainly on Apple devices. Microsoft Smooth Streaming is part of the Microsoft Silverlight platform, and specifications are publicly available. Adobe Open Source Media Framework (OSMF) is close to the Microsoft solution. 3GPP has released specifications for a Packet Switched Streaming (PSS) system; An MPEG working group was also created around the definition of Dynamic Adaptive Streaming over HTTP (DASH). The benefit of using the HTTP protocol in these streaming solutions is its capability to cross over NAT and firewall seamlessly. These HTTP streaming technologies provide a way to compensate erratic network behavior regarding available bandwidth by continuously and gracefully upgrading or downgrading the video quality in order to fit with the bandwidth constraint.

In general HTTP streaming techniques are based on the same concept. They vary in the playlist file formats, the meta-data provided to describe the content options (bit-rate, image dimensions, frame rate...), the organization of the available representations of the content in segments, in the codecs supported, and in the content protection technologies.

When a client device wants to play some audio/video content, it first has to get a file describing how this specific content can be obtained. This is done through HTTP by getting some 'file' from an URL. This file basically lists the available representations of the content (in terms of bit-rate and other properties) and for each one the URLs that enable loading the content segments for each time slice. For example for a Video on Demand content the entire description of the movie is provided, while for live broadcast content the description covers only a short period of time and needs to be reloaded periodically to discover the new items when time passes.

Depending on its capabilities and the knowledge it has from the network environment, the client device selects some representation (typically based on its bit-rate) and loads the first segment(s) of content. It buffers a few segments to be able to cope with network impediments. Then the content from each received segments are played one after the other. At the same time, the client device measures the reception rate and may decide to go to higher or lower bit-rate. In such case, it just requests the next segment(s) from another representation. Every HTTP streaming system is such that it is possible for the client to keep a continuous playing while going from a segment in some bit-rate to the 'next' segment in another bit-rate.

This way when traffic on the network introduces variations on the rate at which the content is received, the client can react by selecting segments with a bit-rate that allows maintaining the client buffer filling to a secure level. Indeed the client usually tries to reach the highest possible bit-rate to provide the better viewing quality, and to stay at a level where the rendering does not suffer from late reception of data causing macro-blocks or picture freezes.

In a network multiple client devices may carry out HTTP streaming simultaneously. If the bandwidth available on the network or on the broadband network is not sufficient to support the whole traffic, the client devices compete to obtain their share of available bandwidth. The HTTP streaming algorithms independently run in each device and fail to provide an optimal share of the bandwidth. The following situations may occur. The bandwidth share may be unfair, as one of the video streams uses a high constant bit-rate, while another one stays at a low bit-rate. Or, oscillations may occur where each device alternatively use high and low bit-rate. Sometimes the devices may simultaneously over-react to network conditions they judge unfriendly, resulting in the selection of a very low bit rate for each devices and a large waste of bandwidth. It may occur even when enough bandwidth is available; the TCP mechanisms underlying the HTTP protocol may suffer from the implicit competition of packets reception for each stream, and this produces the same results of either stable unfair situations or permanent oscillations. Such behavior has a direct impact on the quality of experience for the end user, since the displayed video quality is linked to the used bit-rate.

### SUMMARY OF THE INVENTION

The present invention attempts to remedy at least some of the concerns connected with bandwidth sharing in the adaptive streaming in the prior art by providing a handling of the bandwidth sharing between many receivers receiving streaming contents.

The invention concerns a method to control the transmission data rate between a server and at least two receivers. The server is adapted to transmit data representative of audiovisual contents. The audiovisual contents stored on the server are available from the server in at least two versions. The versions correspond respectively to different transmission bit-rates. The server is adapted to transmit the audiovisual contents in successive parts. Each of the successive parts is chosen as one of at least two versions in response to transmission requests sent by the receivers. The transmission requests comprise a transmission parameter. Advantageously the method comprises the steps of:
- reception by a controller of a first monitoring information from a first receiver, the first monitoring information being representative of the rendering of an audiovisual content by the first receiver,
- reception by a controller of a second monitoring information from a second receiver, the second monitoring information being representative of the rendering of an audiovisual content by the second receiver,
- transmission of a control parameter from the controller to at least one of the receivers, the parameter being defined from the first and the second monitoring information in order to define from the control parameter the transmission parameter or a reception parameter.

According to an embodiment of the invention, each of the first and second monitoring information belongs to a group of parameters comprising:
- the data transmission bit-rate between the server and one of at least two receivers,
- a size of a data reception buffer of one of at least two receivers,
- a quality indicator of the rendering of the audiovisual content by one of at least two receivers,
- the number of times one of at least two receivers switches from one of the versions to another one of the versions during a given time interval,
- the number of bytes received by one of at least two receivers during a predefined time interval,
- the number of bytes received by one of at least two receivers during a predefined time range for each of at least two versions of the audiovisual content;

According to an embodiment of the invention, the control parameter belongs to a group of parameters comprising:
- a maximum value of bit-rate to be requested to the server,
- a list of allowed versions to be requested to the server,
- a maximum size of reception buffer,
- a maximum speed factor to be indicated to the server within the request,
- a parameter of the adaptive streaming algorithm of any of at least two receivers;

The invention also concerns a receiver apparatus for receiving data, the data being representative of an audiovisual content, the audiovisual content being available in at least two versions, the versions corresponding respectively to different transmission bit-rates, the transmission of the audiovisual content being performed in successive parts, each of successive parts is chosen as one of at least two versions in response to transmission requests sent by the receivers, the transmission requests comprise a transmission parameter. Advantageously the apparatus comprises:
- a communication interface for sending a monitoring information representative of the rendering of an audiovisual content by the apparatus,
- a communication interface for receiving a control parameter, the control parameter being defined from the information representative of the rendering of an audiovisual content by the apparatus,
- a computing module to compute a transmission parameter of the transmission request from the control parameter.

According to an embodiment of the invention, the apparatus comprises a memory for the storage of the control parameters and the information representative of the rendering of the audiovisual content.

According to an embodiment of the invention, the apparatus is a laptop equipment.

According to an embodiment of the invention, the apparatus is a set-top box equipment.

According to an embodiment of the invention, the apparatus is a mobile terminal equipment.

The invention also concerns a controller apparatus to control the data transmission rate between a server and at least two receivers, the data being representative of an audiovisual content, the audiovisual content being available from the server in at least two versions, the versions corresponding respectively to different transmission bit-rates, the server being adapted to transmit the audiovisual content in successive parts, each of the successive parts being chosen as one of at least two versions in response to transmission requests sent by the receivers, the transmission requests comprising a transmission parameter. Advantageously, the apparatus comprises:
- a communication interface for receiving a first monitoring information representative of the rendering of an audiovisual content by a first receiver,
- a communication interface for receiving a second monitoring information representative of the rendering of an audiovisual content by a second receiver,
- a computing module to compute a control parameter from at least the first and second monitoring information,
- a communication interface to transmit the control parameter to at least one of the receivers ;

According to an embodiment of the invention, the controller apparatus is located in a residential gateway equipment.

According to an embodiment of the invention, the controller apparatus is located in a Digital Subscriber Line Access Multiplexer (DSLAM) equipement.

The invention further concerns a method in a receiver for receiving data from a server, the data being representative of an audiovisual content, the audiovisual content being available from the server in at least two versions, the versions corresponding respectively to different transmission bit-rates, the server being adapted to transmit an audiovisual content in successive parts, each of the successive parts is chosen as one of at least two versions in response to transmission requests sent by the receivers, the transmission requests comprising a transmission parameter. Advantageously the method comprises the steps of:
- transmission of a monitoring information representative of the rendering of an audiovisual content by the receiver,
- reception of a control parameter, the control parameter being defined from the information representative of the rendering of the audiovisual content by the receiver,
- transmission to the server of a request comprising a transmission parameter defined from at least the control parameter.

According to an embodiment of the invention, the step of reception of a control parameter further comprises a step of updating at least one of reception parameter of the receiver.

The terms "information representative of the rendering of the audiovisual content" (or "level of quality of the rendering") in the present description corresponds to any information being linked to the quality of the rendering of an audiovisual content. For example, it is considered that the version (or corresponding bit-rate) of a content is representative of the quality of the rendering of this content since the quality of the picture depends on the bit-rate. Also, the number of switches between one version and another version is an example considered as being representative of the quality of the rendering of the content since it is noticeable by the user while viewing the content during the rendering. The number of freezes due to a lack of data in the reception buffer of a receiver is another example of monitoring information being representative of the quality of the rendering of an audiovisual content.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 illustrates an overall network architecture in which adaptive streaming is made according to an embodiment of the invention.
- Figure 2 illustrates a receiver as used in the network illustrated in Fig.1.
- Figure 3 illustrates a controller as used in the network illustrated in Fig.1.
- Figure 4 illustrates a server as used in the network illustrated in Fig.1.
- Figure 5 is a diagram illustrating a method in the controller of figures 1 and 3 according to an embodiment of the invention.
- Figure 6 is a diagram illustrating a method in a receiver as represented in Fig. 1, according to an embodiment of the invention.

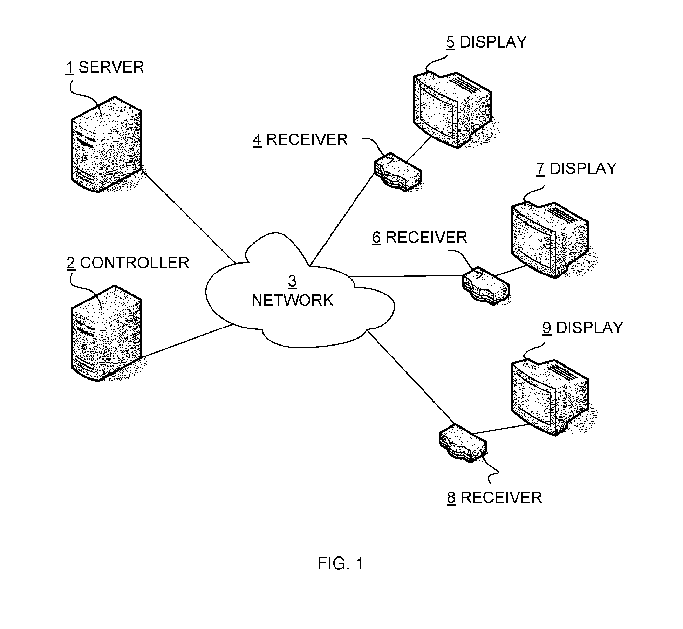

In Figures 1, 2, 3 and 4, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The system according to the embodiment of the invention is represented **figure 1****.** It comprises three client devices 4, 6 and 8 also called receivers, an adaptive streaming server 1 and a controller 2. The receivers 4, 6, 8 are connected to a network 3. The network 3 comprises a wide area network such as internet and some local area sub-networks for the interconnection of the receivers. According to a variant of the embodiment, the network 3 comprises only a wide area network (WAN) and the receivers comprises each one a gateway for the connection to the network 3. According to another variant of the embodiment, the network 3 comprises only a local area network (LAN) such as a home network and the server 1 and the controller 2 are both connected to the home network. According to another variant of the embodiment, the server 1 is connected to a WAN network and the receivers 4, 6 and 8 are connected to a LAN network thanks to a gateway that comprises the controller 2.

The server delivers audiovisual contents to the receivers 4, 6 and 8 according to some requests sent by the receivers. The delivery of an audiovisual content from the server to the receivers uses the HTTP adaptive streaming technique well known from the skilled in the art.

Each of the receivers 4, 6 and 8 are connected to a display apparatus (respectively 5, 7 and 9) for the rendering of the audiovisual contents received by using the adaptive streaming method.

According to the embodiment of the invention, the receivers periodically (or repetitively) send to the controller 2 information related to the adaptive streaming in progress.

Each of the receivers 4, 6 and 8 periodically transmit to the controller 2, the filling level of the memory buffer used for the reception of the data representative of an audiovisual content received from the server 1, the version of the audiovisual content part currently received (i.e.: low quality, medium quality, high quality or the corresponding bit-rates), the available size of the buffer, the number of reception buffer underflow (dry-out) or the number of reception buffer overflow during the adaptive streaming. Alternatively, only a part of the above-listed information is sent to the controller. According to a variant of the embodiment, the information transmitted by the receivers 4, 6, and 8 to the controller 2 are some other information related to the receivers. It can be, for example, the number of times the receiver switches to another version of the audiovisual content during a time interval; the number of version switching during the whole audiovisual content transmission; it can also be the amount of data during a time interval for each version of the audiovisual content.

More generally, any information representative of the network status seen from a receiver (i.e.: available bandwidth, congestions), is relevant for the controller 2 in order to define which receivers have good performances for rendering a streamed content and which receivers have bad performances due to the network status.

According to another variant, the information is the aggressiveness of the adaptive streaming algorithm which is defined as the ability to switch from a version (or quality) to another one of the audiovisual content. A low aggressiveness parameter makes the reception system conservative whereas a high aggressiveness parameter allows the receiver to switch more often from a content version to another one. The aggressiveness is a parameter of the adaptive streaming algorithm of a receiver according to the embodiment of the invention.

According to the information received from the receivers 4, 6 and 8, the controller 2 determines (computes) which receivers are in good adaptive streaming conditions and which receivers are in poor conditions. Good conditions are defined as a rendering of an audiovisual content without interruption and with a medium or high quality. The poor conditions are defined as a rendering with interruption or always with the lower level of quality. The streaming conditions for any of the receivers depend on the network 3 and the use of the network 3 by the other receivers.

Knowing the conditions of data reception, the controller 2 sends control parameters to a part of the receivers in order to adjust the use of the network 3. The controller 2 sends one or more control parameters to the receivers by addressing the receivers individually by using a unicast transmission. According to a variant of the embodiment, the controller 2 addresses a group of receivers by using, for example, a multicast transmission. The multicast transmission allows the addressing of many receivers at the same time. The parameters can be determined, for example, in order to limit the buffer size, to limit the quality of the requested version of a part of an audiovisual content, or to adjust parameter of the adaptive streaming algorithm of a receiver (for example the aggressiveness).

More generally, a control parameter sent by the controller 2 to any of the receivers can be a reception parameter or can be related to a reception parameter (i.e.: the reception buffer size, the aggressiveness of the adaptive streaming algorithm). It can also be related to parameter of the requests (i.e.: the version of content, the bit-rate, the delivery speed of the server) sent from the receiver to the server 1.

The control of the reception buffer size of a receiver is an easy way to control the whole behavior (for the downloading and the rendering) of the receiver since its adaptive streaming algorithm takes into account the size of the reception buffer.

According to the embodiment, the controller 2 sends the control parameters in some messages structured according to a remote control protocol.

Based on the information received from the receivers 4, 6 and 8, the controller 2, acting as a remote management server (or a remote controller) configures the receivers settings (for example the aggressiveness of the adaptive streaming algorithm, the buffer size, the maximum bit-rate required for data transmission) to monitor the quality for the rendering of the received audiovisual contents. According to the embodiment, the overall quality of rendering for the receivers 4, 6 and 8 is computed by adding the previously computed quality of each receiver divided by the number of receivers.

More generally, the embodiment of the invention consists in a method to control transmission data rate between the server 1 and the receivers 4, 6 and 8. The server 1 is adapted to transmit data representative of audiovisual contents. Each of the audiovisual contents is available on the server 1 in at least two versions. The different versions of an audiovisual content correspond respectively to different transmission bit-rates. The server 1 is adapted to transmit the audiovisual content in successive parts (also called chunks). Each of the successive parts is chosen between the available versions in response to a transmission request received by the server 1 from the corresponding receiver 4, 6 or 8. A transmission request sent by a receiver to receive a part of audiovisual content from the server comprises a transmission parameter such as, for example, the speed of data delivery or the version (corresponding to a given bit-rate).

The controller 2 periodically receives the information from the receivers 4, 6 and 8. The information is representative of the rendering of the audiovisual contents received and rendered by the receivers. The audiovisual content can be the same for all receivers or it can be different audiovisual contents for the receivers.

According to the information received from all receivers, the controller 2 computes some control parameters for some receivers in order to find a better sharing of the overall bandwidth. According to the current sharing of the bandwidth at a given time, the sending of a control parameter can be done for one receiver only, for a group of receivers or for all receivers.

The information received by the controller 2 are, for example, the reception memory buffer size, the number of switches from a version to another version of a received audiovisual content, the number of memory buffer underflow or overflow, the aggressiveness parameter of the adaptive streaming algorithm of the receiver.

By sending one or more control parameters to a receiver, the controller 2 can force, for instance, the maximum size of the data reception buffer, the aggressiveness parameter of the adaptive streaming algorithm or the better quality that can be requested by a receiver upon a new adjustment (for a given interval of time) for a given receiver.

According to the embodiment of the invention the information from the receivers 4, 6 and 8 to the controller 2 and the control parameters from the controller 2 to the receivers 4, 6 and 8 are carried by a remote control protocol based on TR-069 (CPE WAN Management Protocol v1.1, Issue 1, Amendment 2, December 2007). The remote control protocol is an extension of the existing TR-069 protocol with some new commands and parameters defined for the embodiment. According to a variant of the embodiment, the control parameters are carried by an extension of TR-069 protocol and the information representative of the rendering sent by the receivers to the controller 2 are carried based on one or more different protocols. In this case, the controller 2 is compatible with any of the different protocols used by the receivers to send the information.

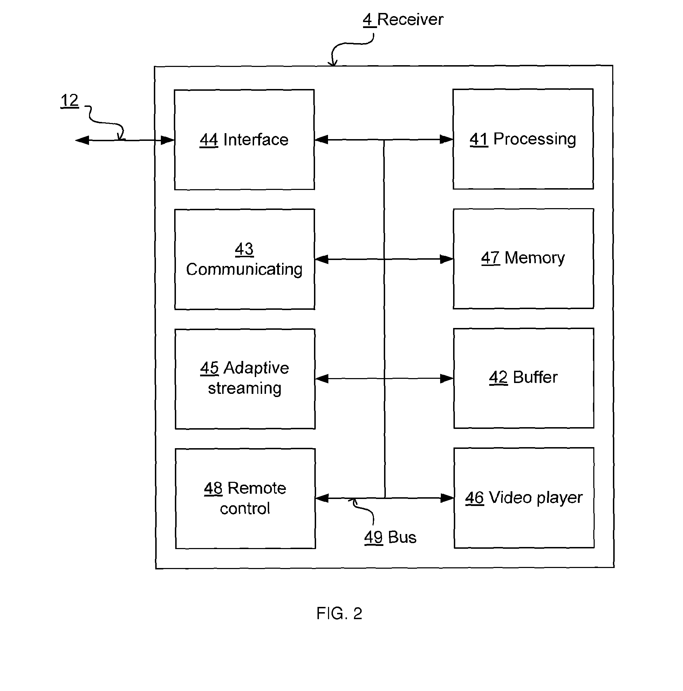

A receiver 4 according to the embodiment of the invention is illustrated in **figure 2****.** The receiver, also called an adaptive streaming client apparatus, comprises a communication interface 44 for connection to the network 3 through the link 12. The receiver comprises a communicating module 43 which comprises the protocol stacks to communicate to the server 1 and the controller 2. In particular the communicating module comprises the TCP/IP stack well known in the art. Of course it can be any other type of network and / or communicating means enabling the adaptive streaming client to communicate to the server 1 and the controller 2. According to the embodiment, a single communication interface is used to receive the control parameters and to send the information representative of the rendering. According to a variant of the embodiment, two different communication interfaces are used. The receiver 4 also comprises an adaptive streaming module 45 which is a computing module. The computing module 45 is an HTTP streaming client that receives HTTP streaming content from the server 1. It continually selects the chunk at the bit-rate that better matches the network constraints and its own constraints. A chunk is defined as a part of the received audiovisual content from the server 1, in a version corresponding to a given bit-rate as defined for the adaptive streaming. The receiver 4 receives the control parameters from the controller 2 thanks to the remote control module 48. The control parameters are stored in the buffer 42 and are readable from the adaptive streaming module 45 which is a computing module. The buffer 42 is also used to store the information representative of the rendering of audiovisual contents. The information are written in the buffer 42 by the adaptive streaming module 45 and are read by the remote control module 48 to be send to the controller 2 through the communication interface. The receiver 4 comprises a video player 46 that is adapted to decode and render the received audiovisual content. The receiver 4 further comprises a processor 41 and a buffer 42. The processor 41 is used for executing the applications and programs stored in the receiver 4. The buffer 42, which is a memory or a part of a memory, is used for buffering the chunks received from the server 1 before they are transmitted to the video player 46. In particular the memory is a volatile memory. The receiver 4 also comprises a non-volatile memory 47 for storing applications and programs running on the client. The receiver 4 could be a portable media apparatus (a mobile equipment) or a laptop.

All the above-cited modules of the receiver 4 are interconnected through an internal bus 49.

Alternatively the receiver 4 does not comprise a video player and comprises an interface to connect a video player. Then the receiver 4 is a video decoder such as a set-top box.

According to the embodiment, the receivers 6 and 8 are similar to the receiver 4.

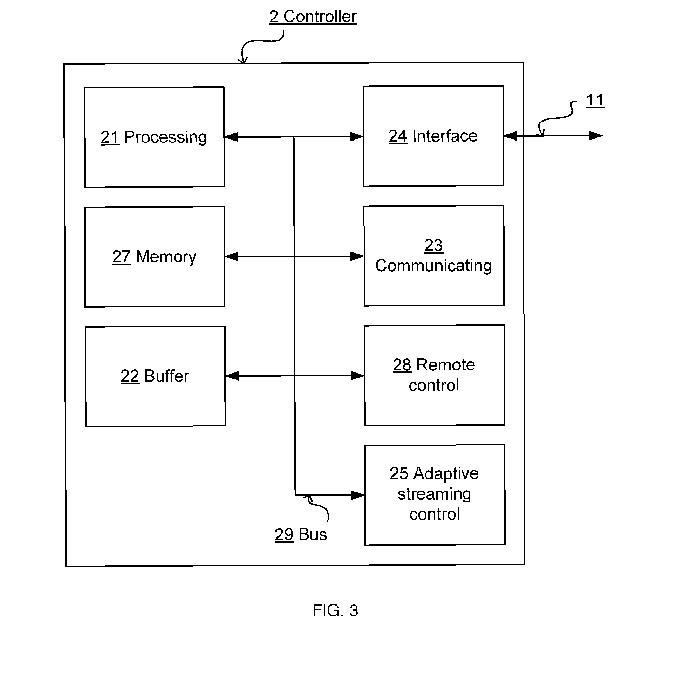

**Figure 3** illustrates the controller 2 of the adaptive streaming system according to the embodiment of the invention. The controller comprises a communication interface 24 for connection to the network 3 and thus, for the communication with the receivers 4, 6 and 8 through the link 11. Similarly to the receivers, the controller comprises a communicating module 23 which comprises the protocol stacks to communicate with the receivers (the adaptive streaming client). According to the embodiment, a single communication interface is used to receive the information representative of the rendering and to send the control parameters. According to a variant of the embodiment, two different communication interfaces are used. The controller comprises a processing unit 21, memory module 27 and a buffer 22. The processing unit 21 is used for executing the applications and programs stored in the controller 2. The buffer 22, which is a memory or a part of a memory, is used for buffering the information and information messages received from the receivers 4, 6 and 8 and the control messages (and parameters) to be sent to the receivers. The controller 2 also comprises a non-volatile memory 27 for storing applications and programs running on the controller. A remote control module 28 is used to handle the remote control protocol for the messaging between the controller and the receivers, comprising receiving information representative to the rendering of audiovisual contents from the receivers and sending control parameters to force parameters of the receivers. According to the embodiment of the invention, the remote control module handles the remote control protocol based on TR-069 to receive and send messages from / to the receivers 4, 6 and 8. The controller 2 further comprises an adaptive streaming module 25 which is a computing module for computing the control parameters to be sent to the receivers according to the received information (representative of the rendering of the audiovisual contents on the receivers). All the above-cited modules of the controller 2 are interconnected through an internal bus 29.

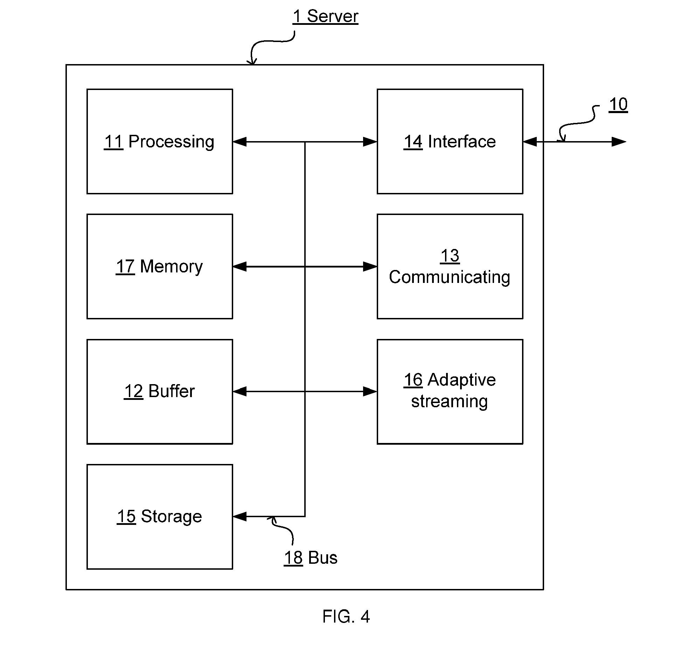

**Figure 4** illustrates the adaptive streaming server 1. The server 1 comprises a communication interface 14 to connect to the network 3 through the link 10 and communicate with the receivers 4, 6 and 8. The communicating module 13 comprises the protocol stacks, such as, for example the TCP/IP stack. The processing unit 11 executes the applications and routines of the server. The non-volatile memory 17 comprises the software and application to be executed by the processing unit 11 and the memory buffer 12 is a volatile memory for data storage during the execution of the application. The buffer 12 is also used for the storage of messages from the receivers including those related to the adaptive streaming (requests). The storage module 15 comprises a media for the storage of all the audiovisual contents to be delivered to the receivers 4, 6 and 8. The storage module 15 comprises all the versions (corresponding to different bit-rates) for each of the audiovisual content. A version of an audiovisual content can be stored either as single file or can be concatenated with other versions in a file. The audiovisual contents can be audio content, video content or both. The adaptive streaming module 16 is in charge of handling the incoming messages from the receivers 4, 6 and 8 for the adaptive streaming of any content stored on the storage module 15. The adaptive streaming module 16 delivers the manifest file corresponding to an audiovisual content and handles the incoming requests from the receivers. It interprets the parameters of the request and delivers the corresponding part of the content (chunk) to the corresponding receiver through the communication interface 14. All the above-cited modules of the server 1 are interconnected through an internal bus 18.

So, the server 1 (illustrated by fig. 4), the controller 2 (illustrated by fig. 3) and the receivers 4,6 and 8 (illustrated by fig. 2) constitute the overall adaptive streaming system of the invention according to the embodiment.

The lines here-after present the initialization of an adaptive streaming session and an example of how the overall system interacts according to the embodiment.

The control of the essential parameters of the adaptive streaming is realized through the usage of a manifest file (comprising a playlist) that a receiver downloads first when initiating an adaptive streaming session. The manifest file contains for example the duration of a chunk, the number of versions (or quality, or bit-rates) each chunk has been encoded, the size of the file, the video format (such as, for example MPEG2-TS or MP4).

The adaptive streaming proposes a continuous streaming between the server 1 and the receivers 2, 4 and 8 without any interruption but with a video quality that degrades when network congestion occurs and upgrades when the congestion disappears. A video file or stream is encoded several times targeting different bit-rates and is stored on the storage module 15 of the server 1. The encoding is for example MPEG2-TS or H264. Each file is split into chunks of the same duration (for example 2 seconds) forming micro files set. All micro files set (one set per bit-rate) are stored in a single HTTP server. The HTTP server is implemented by the server 1. Regularly, (for example every 2 seconds), the receiver that downloads an audiovisual content (receiver 4, 6 or 8) estimates the available bandwidth with the server. The adaptive streaming module 44 of the receiver requests accordingly the content part (chunk) encoded with the corresponding bit-rate and feeds the decoder of the video player 46 progressively. According to the embodiment of the invention, the control protocol and ultimate transport protocol is HTTP. Alternatively, it can be RTSP.

Beside the manifest file, the adaptive streaming 44 module of a receiver gathers several control parameters that are necessary to finely tune the system and that influences the way the network 3 is used. It comprises the algorithm for smoothing the degradation / upgrade of the video quality depending on the network status (for example the congestions and the overall bandwidth). The adaptive streaming algorithm of the adaptive streaming module 45 of a receiver may operate several approaches ranging from the most conservative to the most aggressive. The mode of operation directly impacts the user experience and the network 3 usage.

The use of the controller 2 to define some control parameters of the receivers 4, 6 and 8, including transmission parameters of their request to the server 1, brings the ability to configure some parameters of an adaptive streaming client that have an impact on the end user experience but also on the network 3 traffic and therefore on the overall system performance.

The control parameters sent from the controller 2 to any of the receivers 4, 6 and 8 may be different depending on the network status. The controller may send a parameter to limit the size of the reception buffer to a first receiver and a parameter to limit the bit-rate of the adaptive streaming session to a second receiver. In addition, the controller can send two successive control parameter that are different for a given receiver. For example, the controller can send a control parameter to the receiver 2 to limit the bit-rate of the streaming session and then send a control parameter to the receiver 2 to limit the speed delivery factor of the request to be sent to the server 1 (by the receiver 2). The controller 2 computes the received information and selects the parameters to be set accordingly (at the receiver's side). It also defines the values of these parameters.

In the prior art these parameters are autonomously defined by the clients or hard-coded within adaptive streaming client implementations and cannot be changed.

The controller 2 defines relevant control parameters (and their corresponding values) for the receivers 4, 6 and 8 according to the status information periodically received from the receivers and remotely configure them by the use of a remote control protocol. The controllers 2 "observes" and monitors the impact of each of the receivers on the end user received quality for the complete field of receivers. After the computation of information received from the receivers, the controller 2 determines the optimal system configurations and sends control parameter to a receiver or to a group of receivers. It can be send to all the receivers if necessary.

Hereafter is an example of how the controller 2 monitors the overall performance of the adaptive streaming between the adaptive streaming server 1 and the receivers 4, 6 and 8, through the network 3:

At a time To, none of the receivers 4, 6 and 8 are connected to the server 1 to achieve an adaptive streaming. At time T₁, the receiver 4 sends a request to initialize an adaptive streaming download of an audiovisual content AV1 from the server 1. The server 1 answers the initialization request from the receiver 4 by sending a manifest file indicating three available versions of the AV1 content. The three versions correspond respectively to 500 Kbits/s (low quality), 1 Mbits/s (medium quality) and 2 Mbits/s (high quality) bit-rates. The receiver 4 sends a request at T₂ to get the first part (or first chunk) of the content AV1 in the medium quality version (1 Mbits/s). The receiver 4 receives the first part of AV1 and evaluates the bandwidth of the network link between the server 1 and itself. As the evaluated bandwidth is more than 2 Mbits/s, the receiver 4 requests the second part of the AV1 content in the high quality version (2 Mbit/s) and evaluates again the available bandwidth between the server 1 and itself. As the available bandwidth is evaluated at a value superior to 2 Mbits/s and there is no version of AV1 encoded at a bit-rate more than 2 Mbits/s, the receiver 4 request the third part of the AV1 content in the high quality version and at a double delivery speed. The adaptive streaming system allows the transmission of a speed control parameter in addition to the version of the downloaded part of the content. The receiver 4 then continues to request the high quality version of AV1 content at a double speed between the server 1 and itself and the download goes on. In parallel of the streaming, the receiver 4 periodically sends information to the controller 2. For example, the receiver sends information to the controller 2 every minute. The receiver 4 indicates the numbers of switching from a version of AV1 to another version during the last minute, the average bit-rate computed according to the versions downloaded and the manifest file information, the average delivery speed parameter and the calculated bandwidth between the server 1 and itself. The calculated bandwidth has been computed by the receiver 4 based on the amount of data during the interval of time (1 minute).

The controller 2 computes the received information and does not send yet any control parameter to the receiver 4 since no other receiver is detected that performs an adaptive streaming from the server 1.

At a time T₃, the receiver 6 initializes an adaptive streaming session in order to download an audiovisual content AV2 from the server 1. The server 1 answers the initialization request by sending a manifest file to the receiver 6 that indicates the available versions of AV2. AV2 is available in a 1 Mbits/s version and a 2 Mbits/s version. The receiver 6 requests the first part of the AV2 content in the 1 Mbits/s version. The receiver 6 receives the first part of the AV2 content and evaluates the available bandwidth between the server 1 and itself. It detects that the bandwidth is about 1,5 Mbits/s between the server 1 and itself. It then continues to request the next parts of AV2 in the 1 Mbits/s version of AV2. As for the receiver 4 which continues its adaptive streaming download, the receiver 6 also reports information to the controller 2. The controller 2 now receives information from the receiver 4 and the receiver 6. The controller 2 computes the information and detects that the evaluated available bandwidth are not the same for the receiver 4 and the receiver 6. The controller 2 then send a remote control message to the receiver 4 comprising control parameters to force the requested version to a maximum bit-rate of 1 Mbits/s and the delivery speed factor to 1. The receiver 4 receives the control parameters and sends the next request for the next part of AV1 to the server 1 accordingly. The receivers 4 and 6 continue to report periodically their respective information and the controller 2 detects that the adaptive streaming bit-rates are now about the same for both receivers (4 and 6).

The controller 2 computes the repetitively received information and repetitively adjusts the control parameters of the receivers accordingly. It configures the receivers and impacts the overall performance of the system.

Another example is, if the total bandwidth between the server 1 and the receivers 4 and 6 is about 3 Mbits/s, calculated from the monitoring information received by both receivers 4 and 6, and only the two receivers 4 and 6 are processing adaptive streaming sessions of a same audiovisual content from the server 1, the controller 2 may controls the receivers 4 and 6 by sending control parameters to these receivers 4 and 6 indicating that the successive parts of the audiovisual content should be requested in a version that corresponds to a maximum bit-rate of 1.5 Mbit/s (3 Mbits/s divided per 2).

The controller 2 may also controls, for example, the reception buffer size of any of the receivers (4, 6, 8) that reports (by sending monitoring information) some repetitive interruptions of the rendering (playback) of an audiovisual content due to a lack of data in its reception buffer.

More generally, in the above-cited example of the adaptive streaming system illustrated on the **figure 1****,** the controller 2 controls the transmission data rate between the server 1 and the receivers 4 and 6. The server 1 is adapted to transmit the data representative of the audiovisual contents AV1 and AV2. The audiovisual content AV1 is available from the server 1 in three versions and the content AV2 is available in two versions. The available versions of AV1 and AV2 correspond to different transmission bit-rates. The server 1 is adapted to transmit the audiovisual content AV1 and AV2 in successive parts. Each of the successive parts of AV1 and AV2 are chosen by the corresponding receiver (4 and 6) by transmitting a request to the server 1 comprising a transmission parameter (such as the version (bit-rate) or a delivery speed). The controller 2 receives information reported from the receiver 4 and information from the receiver 6. The information from the receivers is respectively representative of the rendering of the audiovisual contents AV1 and AV2 since they are related to the quality of the rendering. A low bit-rate brings a low quality of rendering for the end used whereas a high bit-rate brings a high quality of rendering.

The controller 2 transmits one or more control parameter to one or more receivers according to the situation of the receivers and the network 3 conditions. The control parameters are defined by the controller 2 from the information reported by the receivers 4, 6 and 8. A control parameter configures the receivers that received it and, depending on the parameter, is used by the receiver in order to define a reception parameter or a transmission parameter for the next request. The transmission parameter defined is for example the version of the audiovisual content, the bit-rate or the delivery speed requested for the delivery of the next part of the content by the server. A control parameter sent by the controller 2 to a receiver can also configure a parameter of the receiver independently of the request to the server, such as the reception buffer maximum size, for example. In this case, it is the control parameter is a reception parameter.

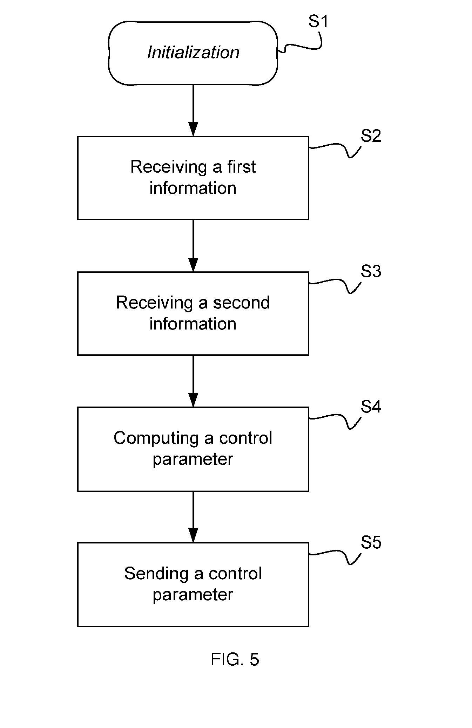

**Figure 5** is a diagram illustrating the method in the controller 2 according to the embodiment of the invention.

The step S1 is the initialization of the adaptive streaming system. At least two receivers send request to the server 1 and initialize two adaptive streaming sessions in order to download and to achieve the rendering of audiovisual contents from the server 1. At least two receivers have received some parts of audiovisual contents. The two receivers can download the same audiovisual content or respectively two different audiovisual contents.

At step S2, one of the two receiver reports an information representative to the rendering of the received part of an audiovisual content to the controller 2.

At step S3, a second receiver reports an information representative to the rendering of the received part of an audiovisual content to the controller 2.

Based on the information received, the controller 2 evaluates the overall performance of the adaptive streaming system and computes at step S4 at least a control parameter to be sent to one or more receivers.

The controller 2 then sends at least a control parameter to at least a receiver in order to configure the receiver and to have a better sharing of the available bandwidth of the network 3.

Advantageously, the method according to the embodiment force the configuration of one receiver or a group of receivers to limit their requested use of bandwidth and to provide more available bandwidth to the other receivers.

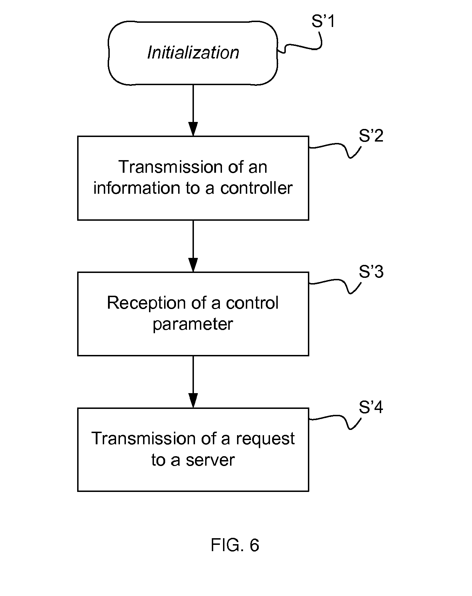

**Figure 6** is a diagram illustrating the method a receiver according to the embodiment of the invention.

At step S'1, the receiver initializes an adaptive streaming session with the server 1 and starts downloading and rendering an audiovisual content.

At step S'2, after the reception of the first parts of the audiovisual content, the receiver reports to the controller 2 one or more information representative of the rendering. The information is for example reported to the controller every minute. The control computes the information received from many receivers (at least two) and sends a control parameter to the receiver. This control parameter is received by the receiver at step S'3.

At step S'4 the receiver sends a request comprising a transmission parameter such as the version of the audiovisual content or the delivery speed by the server 1. The transmission parameter of the request is defined according to the control parameter previously received from the controller 2. For example, the control parameter indicates to the receiver that the version of the content to be requested for the next parts must have a bit-rate inferior to a given value.

Some examples of data model for the control messages carrying control parameters from the controller 2 to the receivers using an extension of the TR-069 protocol is given below:

| STBService {i} Components FrontEnd {i} IP AdaptiveStreaming | | |
|---|---|---|
| Control Parameter | Read /Write | Description |
| AdaptiveAgressivenes | W | Level of aggressiveness of the adaptation algorithm. A low value means that the client will minimise data rate changes and adopt a conservative policy. A high value means that the client will target best possible. |
| MaxBuffer | W | Maximum amount of data in Bytes the client is allowed to store in advance of the current the play out. A large buffer gives more time to the client for adapting to changing quality of service, but will waste network bandwidth if the user stops or changes to another audiovisual content. |
| MaxDataRateRatio | W | Percentage of the maximum data rate the client shall not exceed when downloading data. It shall be greater than 100. For instance if the maximum data rate of a stream is 8Mbit/s, and if MaxDataRateRatio is set to 150, then the client shall always download data at a rate lower than 12Mbit/s. |

According to the embodiment, the controller 2 is able to adjust the bit-rate between the server 1 and any of the receivers 4, 6 or 8 in order to have a fair delivery of audiovisual content.

The invention is not limited to the embodiment described hereabove. Particularly the invention also concerns a method to control the adaptive streaming between many servers and a field of receivers. According to a variant, the controller predefines the parameters for some groups of receivers within the field of receivers and then controls some of the receivers individually according to the information received.

According to another variant, the controller first uses a random algorithm to define the control parameters, initialize the receivers, and then controls some of the receivers according to the information received.

According to another variant, the controller controls the receivers by addressing some groups of receivers and redefines the groups periodically.

Advantageously, the controller gives priority or privileges to some of the receivers. It can be done, for example, according to a level of subscription to a service provider or depending on the expected level of the quality of the rendering for a subset of the receivers (HD quality versus normal quality, for example).

The invention also concerns any system of adaptive streaming delivering some contents from at least a server to at least two receivers. Advantageously, the audiovisual content comprises any kind of content such as text, maps, music, video, meta-data, binary data (i.e.: executable application).

The invention concerns generally data receivers. It comprises apparatus such as set-top boxes, gateways including an audio/video decoder, laptop, and mobile equipments (mobile phone, personnel assistants, positioning systems).

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Method in a controller (2) to control transmission data rate between a server (1) and at least two receivers (4, 6, 8), said server (1), said controller (2) and said at least two receivers (4, 6, 8) being connected to a network (3) and said server (1) being adapted to transmit data representative of an audiovisual content, said audiovisual content being available from said server (1) in at least two versions, said versions corresponding respectively to different transmission bit-rates, said server (1) being adapted to transmit said audiovisual content in successive parts, each of said successive parts being chosen as one of at least two versions in response to transmission requests sent by said at least two receivers (4, 6, 8), said transmission requests comprising a transmission parameter, said method being **characterized in that** it comprises at a controller (2) the steps of:
- repetitively receiving first monitoring information from a first receiver (4, 6, 8), said first monitoring information being representative of the level of quality of the rendering of an audiovisual content by said first receiver,
- repetitively receiving second monitoring information from a second receiver (4, 6, 8), said second monitoring information being representative of the level of quality of the rendering of an audiovisual content by said second receiver,
- transmission of a control parameter from said controller (2) to at least one of said receivers (4, 6, 8), said control parameter depending on said first and said second monitoring information in order to define from said control parameter, in at least one of said receivers (4, 6, 8), said transmission parameter of at least one of said transmission requests or a reception parameter of at least one of said receivers (4, 6,8).

2. Method according to claim 1, **characterized in that** each of said first and said second monitoring information belong to a group of parameters comprising :
- the data transmission bit-rate between said server and one of said at least two receivers (4,6,8),
- a size of a data reception buffer of one of said at least two receivers (4,6,8),
- a quality indicator of the rendering of said audiovisual content by one of said at least two receivers (4,6,8),
- the number of times one of at least two receivers (4,6,8) switches from one of said versions to another one of said versions during a given time interval,
- the number of bytes received by one of at least two receivers (4,6,8) during a predefined time interval,
- the number of bytes received by one of at least two receivers (4,6,8) during a predefined time range for each of said at least two versions of said audiovisual content.

3. Method according to claim 1 or 2, **characterized in that** said control parameter belongs to a group of parameters comprising :
- a maximum value of bit-rate to be requested to said server (1) by one of said at least two receivers (4, 6, 8),
- a list of allowed versions of said versions to be requested to said server (1) by one of said at least two receivers (4, 6, 8),
- a maximum size of reception buffer of one of said at least two receivers (4, 6, 8),
- a maximum speed factor to be indicated to said server (1) within said request sent by one of said at least two receivers (4, 6,8),
- a parameter of the adaptive streaming algorithm of any of said at least two receivers (4, 6, 8).

4. Apparatus (4) for receiving data, said data being representative of an audiovisual content, said audiovisual content being available in at least two versions corresponding respectively to different transmission bit-rates, the transmission of said audiovisual content being performed in successive parts, each of said successive parts being chosen as one of at least two versions in response to transmission requests sent by at least two receivers (4, 6, 8), said transmission requests comprising a transmission parameter, said apparatus (4) being **characterized in that** it comprises:
- a communication interface (44) for sending monitoring information representative of the quality of the rendering of an audiovisual content by said apparatus,
- a communication interface (44) for receiving a control parameter, said control parameter depending on said monitoring information representative of the quality of the rendering of an audiovisual content by said apparatus,
- a computing module (45) to compute said transmission parameter of said transmission request from said received control parameter.

5. Apparatus according to claim 4, **characterized in that** it comprises a memory (42) for the storage of said received control parameter and said monitoring information representative of the quality of the rendering of an audiovisual content.

6. Apparatus according to claim 4 or 5, **characterized in that** it is a laptop equipment.

7. Apparatus according to claim 4 or 5, **characterized in that** it is a set-top box.

8. Apparatus according to claim 4 or 5, **characterized in that** it is a mobile terminal.

9. Apparatus (2) to control the data transmission rate between a server (1) connected to a network (3) and at least two receivers (4, 6, 8) connected to said network (3), said data being representative of an audiovisual content, said audiovisual content being available from said server (1) in at least two versions, said versions corresponding respectively to different transmission bit-rates, said server (1) being adapted to transmit said audiovisual content in successive parts, each of said successive parts being chosen as one of at least two versions in response to transmission requests sent by said at least two receivers (4, 6, 8), said transmission requests comprising a transmission parameter, said apparatus being **characterized in that** it comprises:
- a communication interface (24) for repetitively receiving from a first receiver (4, 6, 8) first monitoring information representative of the quality of the rendering of an audiovisual content by said first receiver (4, 6, 8),
- a communication interface (24) for repetitively receiving from a second receiver (4, 6, 8) second monitoring information representative of the quality of the rendering of an audiovisual content by said second receiver (4, 6, 8),
- a computing module (25) to compute a control parameter from at least said first and said second repetitively received monitoring information,
- a communication interface (24) to transmit said control parameter to at least one of said receivers (4, 6, 8).

10. Apparatus according to claim 9, **characterized in that** it is located in a residential gateway equipment;

11. Apparatus according to claim 9, **characterized in that** it is located in a Digital Subscriber Line Access Multiplexer equipment;

12. Method in a receiver (4, 6, 8) for receiving data from a server (1), said data being representative of an audiovisual content, said audiovisual content being available from said server (1) in at least two versions, said versions corresponding respectively to different transmission bit-rates, said server (1) being adapted to transmit said audiovisual content in successive parts, each of said successive parts being chosen as one of at least two versions in response to transmission requests sent by said at least two receivers (4, 6, 8), said transmission requests comprising a transmission parameter, said method being **characterized in that** it comprises the steps of:
- transmission to a remote controller (2) of a monitoring information representative of the rendering of said audiovisual content by said receiver,
- reception from said remote controller (2) of a control parameter, said control parameter depending on said monitoring information representative of the rendering of said audiovisual content by said receiver (4, 6, 8),
- transmission to said server (1) of a request comprising said transmission parameter defined from at least said control parameter.

13. Method according to claim 12 **characterized in that** the step of reception of a control parameter further comprises a step of updating at least one reception parameter of said receiver (4, 6, 8).
